# EUROPÄISCHE PATENTSCHRIFT

(11) **EP 1 064 738 B1**
(45) Veröffentlichungstag und Bekanntmachung des Hinweises auf die Patenterteilung: **19.04.2006**
(21) Anmeldenummer: 98965605.3
(22) Anmeldetag: 03.12.1998
(51) Int. Cl.: H04B 10/00, H04B 10/08

(54) **VERFAHREN ZUR SCHALTUNG EINER ERSATZVERBINDUNG BEI OPTISCHEN UBERTRAGUNGSEINRICHTUNGEN**
METHOD FOR ESTABLISHING A COMMUNICATION ON A STANDBY LINK IN OPTICAL TRANSMISSION FACILITIES
PROCEDE POUR REALISER UNE COMMUTATION SUR UNE LIAISON DE SECOURS DANS DES INSTALLATIONS DE TRANSMISSION OPTIQUES

(30) Priorität: 18.03.1998 DE 19811831; 07.08.1998 DE 19835863
(43) Veröffentlichungstag der Anmeldung: 03.01.2001
(73) Patentinhaber: SIEMENS AKTIENGESELLSCHAFT, 80333 München (DE)
(72) Erfinder: JAHREIS, Oliver, D-80687 München (DE); HEILES, Jürgen, D-81371 München (DE)
(86) Internationale Anmeldenummer: PCT/DE1998/003561
(87) Internationale Veröffentlichungsnummer: WO 1999/048229

(56) Entgegenhaltungen:
- EP-A- 0 535 858
- US-A- 5 706 277
- PATENT ABSTRACTS OF JAPAN vol. 011, no. 077 (E-487), 7. März 1987 & JP 61 232734 A (MITSUBISHI ELECTRIC CORP), 17. Oktober 1986
- PATENT ABSTRACTS OF JAPAN vol. 009, no. 328 (E-369), 24. Dezember 1985 & JP 60 160734 A (FUJITSU KK), 22. August 1985

## Beschreibung

Die Erfindung betrifft ein Verfahren nach dem Oberbegriff des Patentanspruchs 1.

In optischen Übertragungsnetzen wird bei Störungen einer Verbindung eine sogenannte Protection-Verbindung über einen anderen Übertragungsweg geschaltet. Für Ringnetze sind derartige Ersatzschaltungen beispielsweise in "26. European Conference On Optical Communication ECOC 96, Oslo, Seite 3.51 bis 3.54" beschrieben. Beim sog. "Hot Stand By"-Betrieb wird dieselbe Nachricht ständig parallel über zusätzliche Protection-Datenwege übertragen, so daß im Störungsfall ohne Zeitverzögerung umgeschaltet werden kann.

Bei der optischen Übertragung mittels Wellenlängen-Multiplextechnik treten noch zusätzliche Probleme auf, die es erschweren, einen Leitungsbruch oder sonstigen Ausfall des Nutzsignals zu erkennen. Aus Sicherheitsgründen wird bei einer gestörten Verbindung das optische Sendesignal abgeschaltet, beispielsweise indem der Laser oder ein nachgeschalteter optischer Verstärker abgeschaltet oder ein Schalter betätigt wird. Diese Maßnahmen werden als Laser-Sicherheitsabschaltung bezeichnet.

So ist es üblich, zusätzlich zu den Nutzdaten in einem Service-Kanal weitere Daten zu übertragen, so daß auch bei Ausfall von Nutzdaten (Payload) ein Signal mit einem nicht vernachlässigbaren Pegel empfangen wird. Andererseits soll auch dann keine Abschaltung des Sendesignals bzw. Sendekanals erfolgen, wenn kein Nutzsignal ausgesendet wird oder bei einem Wellenlängenmultiplexsignal kein Kanal belegt ist.

Im Patent US 6,194,707 ist einoptisches Übertragungssystem beschrieben, bei dem in jeder Übertragungsrichtung ein Working- und ein Protection-Signal übertragen werden. Im Falle eines fehlenden Empfangssignals werden spezielle Signale übertragen, die ein Abschalten des Lasers bewirken. In diesem Patent werden die zum Anmeldezeitpunkt beschriebenen Sicherheitsabschaltungen beschrieben. Die Neuerung besteht darin, dass nur die gestörten Fasern abgeschaltet werden; in der Gegenrichtung wird die Verbindung weiter genutzt. Das hat zwar den Vorteil, dass weniger Umschaltvorgänge erfolgen, jedoch erscheint es aus Sicherheitsgründen geboten, keine gefährlichen Signale über eine gestörte Verbindung in beiden Richtungen zu übertragen. Außerdem setzt die Neuerung eine intakte Protection-Verbindung und einen ungestörten Betrieb in der Gegenrichtung voraus. Auch kann das Erkennen eines bestimmten Signals problematisch sein. Zusammengefasst kann gesagt werden, dass weder die Zuverlässigkeit einer Signalisierung in Grenzfällen noch die Sicherheit ausreichend erscheinen.

Aus dem Patent US 5,428,471 ist zur Vermeidung einer Gefährdung durch die Übertragungssignale in einem optischen Kommunikationssystem bekannt, die Ausgangsleistung von Verstärkern zu reduzieren und Kontinuitätssignale auszusenden.

Aufgabe der Erfindung ist es, sowohl ein sicheres Kriterium bei Ausfall eines Nutzsignals zu ermitteln und in diesem Fall, falls möglich, ein Signal zur Faser-Ersatzschaltung zu generieren aber fehlerhafte Ersatzschaltungen zu vermeiden. Weiterhin ist eine zuverlässige Laser-Sicherheitsabschaltung der gestörten Übertragungsleitung durchzuführen und auch ein problemloses Wiedereinschalten zu ermöglichen.

Das Problem einer zweckmäßigen Sicherheitsabschaltung des Nutzsignals wird durch die in den unabhängigen Ansprüchen 1 und 6 angegebenen Verfahren gelöst.

Die eine Protection-Umschaltung auslösenden Kriterien werden auch für die eine Laser-Sicherheitsabschaltung verwendet. Das einfach zu realisierende Verfahren sorgt für ein sicheres Erkennen eines fehlenden Nutzsignals. Bei der Erfindung wird auch wenn in einem Terminal der Laser/Verstärker für das auszusendende Nutzsignal abgeschaltet ist, weiterhin Kontrollsignale mit einem zulässigen Pegel zu dem korrespondierenden Terminal übertragen werden. Hierdurch ist es möglich, eine Neueinschaltung oder Wiedereinschaltung des Systems vorzunehmen, ohne daß der Überwachungsmodus außer Kraft gesetzt werden muß. Die Energie im Überwachungskanal ist so bemessen, daß eine Gefährdung von Reparaturarbeiten ausführenden Monteuren ausgeschlossen ist.

Über den Überwachungskanal wird die Kontrollsignale empfangende Station über den Betriebszustand des korrespondierenden Terminals informiert und kann dessen Laser-Abschaltsignal (remote laser safety switching) empfangen. Der Überwachungskanal ermöglicht durch die Kontrollsignale eine erneute Inbetriebnahme, ohne daß die Überwachungseinrichtungen abgeschaltet werden müssen und so eine Gefährdung den Fehler beseitigender Monteure möglich ist. Eine versuchsweise Aussendung von Signalen mit hoher Energie ist nicht mehr erforderlich.

Die Übertragung der Kontrollinformationen in einem "out of band" Überwachungskanal hat den Vorteil, daß noch geringe Übertragungsleistungen erforderlich sind, da die Kontrollsignale in jeder Verstärkerstelle neu regeneriert werden können.

Weitere Vorteile sind in den Unteransprüchen angegeben.

Ein Ausführungsbeispiel der Erfindung wird anhand von Figuren näher beschrieben.

Es zeigen:
- Figur 1: den prinzipiellen Aufbau eines Übertragungsnetzes,
- Figur 2: eine Anordnung zur Ersatzschaltung und zur Laser-Sicherheitsabschaltung,
- Figur3: eine erfindungsgemäße Variante des Übertragungsnetzes,
- Figur 4: eine Anordnung zur Ersatzschaltung und zur Laser-Sicherheitsabschaltung bei dieser Variante,
- Figur 5: eine Anordnung zur Laser-Sicherheitsabschaltung und zur Ersatzschaltung bei einfach ausgeführten Verbindungen und
- Figur 6: eine Verstärkerstelle.

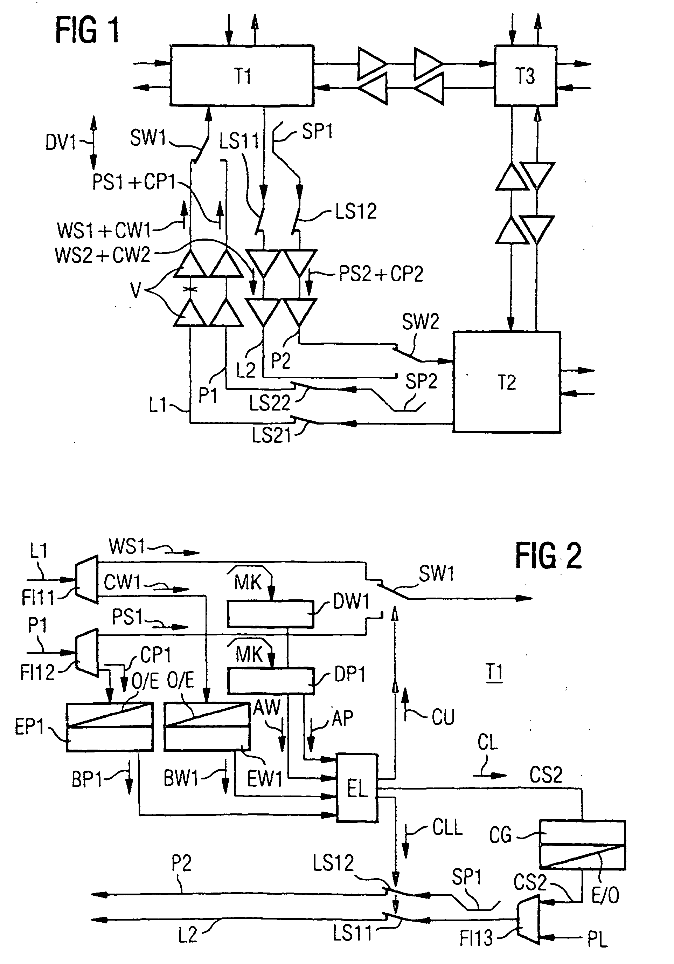

Figur 1 zeigt den Teil eines Übertragungsnetzes mit drei Terminals T1 bis T3. Hiervon soll zunächst die Verbindung DV1 zwischen den Terminals T1 und T2 näher betrachtet werden. Über eine erste Working-Lichtleitfaser L1 wird ein erstes Working-Signal WS1 vom Terminal T2, dieses ist beispielsweise ein Cross-Connector, zum Terminal T1 übertragen. Gleichzeitig wird über eine zweite Lichtleitfaser, die Protektion-Lichtleitfaser P1, ein identisches Protection-Signal PS1 übertragen. Jedes dieser Signale kann aus einem oder mehreren Teilsignalen bestehen, denen jeweils eine Wellenlänge zugeordnet ist. Außerdem wird jeweils über einen Überwachungskanal ein Kontrollsignal CS1, CP1 (oder mehrere Kontrollsignale) übertragen. Dieses enthält unter anderem Belegungsinformation, die angibt, ob mindestens ein Teilsignal gesendet (oder kein Signal gesendet wird). Bei Varianten kann die Anzahl der vorhandenen bzw. nicht vorhandenen Teilsignale angegeben werden.

In der Gegenrichtung werden ebenfalls ein Working-Signal WS2 und ein Protection-Signal PS2 sowie ihre zugehörigen Kontrollsignale CW2, CP2 über weitere Lichtleitfasern L2 und P2 zum zweiten Terminal T2 übertragen. Das Protection-Signal wird in diesem Ausführungsbeispiel jeweils durch einen Splitter SP1 bzw. SP2 vom ursprünglichen Sendesignal abgezweigt. Ebenso ist auch eine Verdoppelung der Sendeeinrichtungen üblich. Auch können unterschiedliche Kontrollsignale vorgesehen werden.

Das Kontrollsignal kann entweder jeweils sendeseitig eingefügt werden und mit dem Nutzsignal (Payload) übertragen werden (in band) oder aber außerhalb des eigentlichen Übertragungsbandes (out of band) übertragen und in jedem Verstärker/Regenerator überprüft und neu generiert werden. In diesem Ausführungsbeispiel wird dieselbe Belegungsinformation über die Working- und die Protection-Lichtleitfaser übertragen, die auch separate Informationen für die Working- und die Protection-Verbindung enthalten kann.

Bei einem Bruch der mit Verstärkern V versehenen Working-Lichtleitfaser L1 muß nun auf die Protection-Lichtleitfaser P1 mit Hilfe eines Umschalters SW1 umgeschaltet werden. Entsprechendes gilt für das zweite Terminal T2.

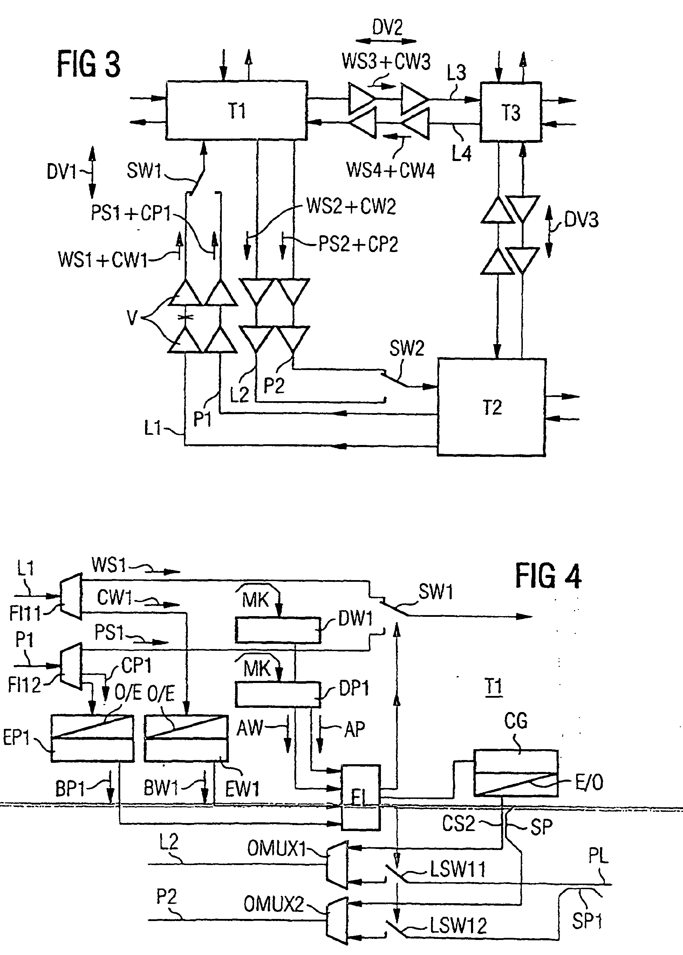

In Figur 2 ist eine Anordnung zur Überwachung der Empfangssignale und zur Protection-Umschaltung detaillierter dargestellt. In einer ersten Filtereinrichtung (Wellenlängen-Demultiplexer) FI11 wird das Kontrollsignal CW1 vom Working-Signal WS1 getrennt und nach einer opto-elektrischen Wandlung O/E einer ersten Kontrollsignal-Auswerteeinrichtung EW1 zugeführt, die aufgrund der übertragenen Belegungsinformation BW1 feststellt, ob das Working-Signal WS1 gesendet wird oder die entsprechende Sendeeinrichtung unbestückt ist. Die Belegungsinformation BW1 wird zwischengespeichert und einer Entscheidungslogik EL zugeführt.

In derselben Weise wird über eine Filtereinrichtung FI12 das Protection-Kontrollsignal CP1 separiert, in einer zweiten Kontrollsignal-Auswerteeinrichtung EP1 ausgewertet und die (in diesem Ausführungsbeispiel identische) Belegungsinformation BP1 ebenfalls der Entscheidungslogik EL zugeführt.

Das vom Kontrollsignal separierte Working-Signal WS1 wird über einen Meßkoppler MK einem Signal-Detektor DW1 zugeführt, der feststellt, ob mindestens ein Teilsignal empfangen wird und ein Aktiv-Kriterium AW abgibt (bzw. "Loss of Payload" feststellt).

Ebenso wird das Protection-Signal PS1 in einem zweiten Signal-Detektor DP1 überprüft und gegebenenfalls ein entsprechendes Aktiv-Kriterium AP (aktiv Protection) festgestellt.

Die Ausgänge beider Signal-Detektoren sind ebenfalls mit der Entscheidungslogik verbunden. Weitere Kriterien zum sicheren Erkennen eines Nutzsignals können ebenfalls verwendet werden. Die Pegelüberwachung ist jedoch für transparente Übertragungssysteme besonders geeignet.

Wie auch in den anderen Terminals werden im Terminal 1 das auszusendende Nutzsignal PS2 und das Kontrollsignal CS2 über ein Filter (Wellenlängen-Multiplexer, Koppler) FI13 zusammengefaßt. Für den Fall, daß das Kontrollsignal durch Modulation dem Nutzsignal überlagert werden, treten anstelle der Filter natürlich entsprechende Modulatoren bzw.Demodulatoren. Durch einen Splitter SP1 erfolgt die Aufteilung in ein Working-Signal und ein Protection-Signal.

Die Entscheidungslogik EL gibt dann ein Umschaltkriterium CU ab, wenn eines der Kontrollsignale CW1 oder CP1 signalisiert, daß zwar das Working-Signal WS1 ausgesendet aber nicht empfangen wird. Nur wenn das Protection-Signals PS1 empfangen wird, sollte umgeschaltet werden.

Die Entscheidungslogik veranlaßt bei Ausfall des Working-Signals WS1 außerdem durch eine Abschaltsignalisierung CL die Aussendung eines entsprechenden Kontrollsignals, eines Laser-Fernabschaltsignals, durch einen Kontrollsignal-Generator CG zum Terminal 2, das zum Öffnen eines Laser-Sicherheitschalters LS21 (Figur 1) führt, so daß auf der defekten Working-Lichtleitfaser L1 keine Energie mehr übertragen wird.

Bei Ausfall des Working-Signals WS1 und/oder des Protection-Signals PS1 wird der eigene Laser durch das Abschaltkriterium CLL abgeschaltet bzw. die oder einer der Laser-Sicherheitsschalter LS11 und LS12 werden geöffnet. Durch das Abschalten des Sendesignals wird im Terminal T2 bewirkt, daß hier der Laser bzw. das nicht empfangene Signal ebenfalls abgeschaltet wird, so daß zum Terminal T1 keine Leistung übertragen wird und Reparaturarbeiten ungefährdet durchgeführt werden können.

Zum Einschalten der Übertragungseinrichtung bzw. erneuten Einschalten nach einer Reparatur wird die Abschaltlogik kurzfristig außer Kraft gesetzt. Auch ist es üblich, durch kurzzeitiges Einschalten des Lasers die Neueinschaltung zu Signalisieren.

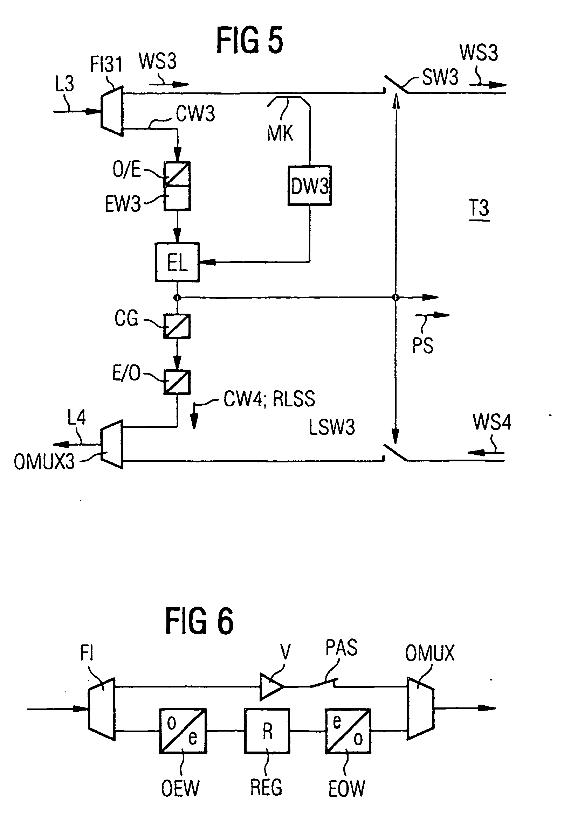

In Figur 3 ist eine erfindungsgemäße Variante dargestellt, bei der die Nutzsignale einzeln abschaltbar sind. Zunächst wird wieder die Datenverbindung DV1 betrachtet. Die Laser-Sicherheitsabschalter LS11, LS12, LS21 und LS22 der Terminals T1 und T2 fehlen in der Darstellung. Wie aber aus Figur 4 ersichtlich ist, wird der Überwachungskanal bzw. das Kontrollsignal (Kontrollsignale) CS2 jetzt durch einen Splitter SP in zwei Signale aufgeteilt und über optische Multiplexer (Filter oder Koppler) OMUX1 und OMUX2 jeweils mit dem Working- bzw. Protection-Signal zusammengefaßt. Die Laser-Sicherheitsabschalter LSW11 und LSW12 schalten jetzt lediglich das Nutzsignal ("payload"; Working- bzw. Protection-Signal) PL für jede Lichtleitfaser separat ab (oder bei einer anderen Ausführungsform gemeinsam ab). Die Kontrollsignale CW2 und CP2 können auf beiden Lichtleitfasern weiterhin zum Terminal T2 übertragen werden. Es können auch unterschiedliche Kontrollsignale im Zeitmultiplexbetrieb oder unterschiedliche Kontrollsignale über die Working- und Protection-Leitung übertragen werden.

Bei einem Faserbruch, beispielsweise der Working-Lichtleitfaser L1, wird vom Terminal T1 weder das Working-Signal WS1 noch das zugehörige Kontrollsignal CW1 empfangen. Dies veranlaßt die Entscheidungslogik EL die auszusendenden Kontrollsignale CS2, die auch als SA-Signal "still alive" bezeichnet werden, zu ändern, abzuschalten oder ein entsprechendes Laser-Fernabschaltsignal - häufig mit RLSS "remote laser savety switching" bezeichnet - auszusenden, wodurch das dieses Signal empfangene Terminal T2 zur Abschaltung des Nutzsignals veranlaßt wird.

Wird vom Terminal T1 weder das Working- noch das Protection-Signal empfangen, werden in der Regel auch keine Nutzsignale zurückgesendet, was zusätzlich von der Entscheidungslogik des Terminals T2 berücksichtigt werden kann. Bereits bei einem ausgefallenen Nutzsignal kann die Aussendung des entsprechenden Sendesignals unterbleiben.

Auch bei einer aufgrund eines fehlenden Empfangssignals, des Nutz- oder des Kontrollsignals, im Terminal 1 erfolgten Laser-Sicherheitsabschaltung des eigenen Nutz-Sendesignals wird dem korrespodierenden Terminal T2 über den weiter aktiven Überwachungskanal mitgeteilt, ob und welches der empfangenen Signale (Working- oder Protection) gestört oder ungestört ist und welcher der Laser-Sicherheitsabschaltern LSW11 oder LSW12 des Terminals T1 entsprechende Laser-Sicherheitsabschalter im Terminal 2 betätigt werden soll.

Während bei Ausfall eines Empfangssignals auch das entsprechende Sendesignal einschließlich des Kontrollsignals abgeschaltet werden kann, da ja ein weiterer Ubertragungskanal zur Verfügung steht, ist dies bei dem Ausfall des Working- und des Protectionsignals nicht mehr möglich und sollte deshalb auch nicht durchgeführt werden. Die Kontrollsignale werden vielmehr weiterhin übertragen.

Bei einer Neuinstallation bzw. beim erneuten Einschalten nach einer Reparatur muß wegen der fortbestehenden Übertragungsmöglichkeit für Kontrollsignale die Abschaltlogik nicht mehr außer Kraft gesetzt werden, um zu vermeiden, daß ein Neuaufbau der Verbindung verhindert wird, da die Kontrollsignale immer übertragen werden und sich entsprechend des Zustandes der Datenverbindung ändern. Empfängt das Terminal T1 das Kontrollsignal, wird kein Laser-Fernabschaltsignal mehr ausgesendet und die im Terminal T2 veranlaßte Sicherheitsabschaltung ("remote laser safety switching") aufgehoben.

Voraussetzung zur Anwendung dieser Variante ist, daß die Kontrollsignale mit einem entsprechend geringen Pegel übertragen werden, der keine Gefährdung für das Reparaturpersonal bedeutet.

Das Terminal T3 verfügt nach Figur 3 lediglich über Working-Verbindungen WS3 bzw.WS4 zum Terminals T1. In Figur 5 ist ein Prinzipschaltbild des Terminals, soweit es die Laserabschaltung betrifft, dargestellt. Das Schaltbild entspricht der Entscheidungslogik für jeweils eine der Lichtleitfasern der Verbindung DV1 zwischen den Terminals T1 und T2. Da zwischen dem Terminal T1 und dem Terminal T3 über die Datenverbindung DV2 nur die Working-Signale WS3 und WS4 mit ihren Kontrollsignalen CW3 und CW4 über getrennte Lichtwellenleiter übertragen werden, muß z.B. die Entscheidungslogik EL des Terminals T3 nur das Working-Signal WS3 und das zugehörige Kontrollsignal CW3 auswerten; entsprechend sind nur eine Kontrollsignal-Auswerteeinrichtung EW3 und ein Signal-Detektor DW vorgesehen. Die Filtereinheiten usw. sind entsprechen Figur 4 bezeichnet.

Bei einem Ausfall des Working-Signals WS3 und des Kontrollsignals CW3 wird auf einen Faserbruch geschlossen, das auszusendende Working-Signal WS4 wird abgeschaltet und über den Kontrollsignal-Generator CG ein entsprechend geändertes Kontrollsignal CW4 (auch kein Kontrollsignal) oder ein zusätzliches Laser-Abschaltsignal RLSS nach der elektrooptischen Umsetzung E/O über den weiterhin aktiven Überwachungskanal zur Gegenstelle, dem Terminal 1, gesendet. Darüber hinaus kann durch die Entscheidungslogik durch ein Protection-Signal PS eine Ersatzschaltung über noch intakte Datenverbindungen DV3 (Figur 3) veranlaßt werden.

Prinzipiell kann die Laser-Sicherheitsabschaltung im Terminal 1 auch nur aufgrund des Laser-Fernabschaltsignals des Terminals T3 erfolgen. Aus Sicherheitsgründen erfolgt aber auch eine Abschaltung des Working-Signals WS4. In dem Terminal T1, das das Laser-Abschaltsignal empfängt, wird vorteilhafterweise auch - wie bisher - wieder das Empfangssignal ausgewertet und nur wenn dieses fehlt das eigene auszusendende Working-Signal abgeschaltet. Hierdurch wird ein unnötiges Abschalten vermieden, wenn bei einer einfachen Ausführung der Erfindung eine Störung des Kontrollsignals bereits als Aufforderung zur Laser-Abschaltung verstanden wird.

In Figur 6 ist eine Verstärkerstelle dargestellt, wie sie zwischen den Terminals vorgesehen ist. Sie enthält für jede Übertragungsrichtung eine Filteranordnung FI zum Aufteilen des ankommenden Signals in ein Nutzsignal und ein Kontrollsignal. Im Übertragungsweg des Nutzsignal liegen ein Verstärker V und ggf. auch ein Regenerator. Für den Überwachungskanal ist neben einem opto-elektrischen Wandler OEW ein separater Regenerator RG und ein elektro-optischer Wandleer EOW vorgesehen. Das Nutzsignal und die Kontrollsignale werden nach der Verstärkung bzw. Regeneration über einen optischen Multiplexer OMUX zusammengefaßt. Bei einem fehlenden Nutzsignal wird der Ausgangssignal des Verstärkers durch einen Pegelabschalter PAS durch eine hier nicht dargestellte Überwachungseinrichtung abgeschaltet, so daß, bedingt durch die Verstärkerregelung, keine Störsignale weitergeleitet werden. Unter Umständen kann auch das Kontrollsignal zusammen mit dem Nutzsignal verstärkt werden (in band Überwachungskanal). Dann muß für eine entsprechende Reduzierung eines Störpegels gesorgt werden.

## Patentansprüche

1. Verfahren zur Laser-Sicherheitsabschaltung und/oder Faser-Ersatzschaltung bei optischen Übertragungseinrichtungen, bei dem von einem zweiten Terminal (T2) zu einem ersten Terminal (T1) ein Working-Signal (WS1) und ein zugehöriges Kontrollsignal (CW1) mit einer Belegungsinformation (BW1) für das Working-Signal (WS1) gemeinsam über eine Working-Lichtleitfaser (L1) und ein gleiches Protection-Signal (PS1) und ein zugehöriges Kontrollsignal (CP1) mit einer Belegungsinformation (BP1) für das Protection-Signal (PS1) gemeinsam über eine Protection-Lichtleitfaser (P1) übertragen werden sowie entsprechende Working-, Protection- und Kontrollsignale (WS2, CS2; PS2, CP2) über zwei weitere Lichtleitfasern (L2, P2) vom ersten Terminal (T1) zum zweiten Terminal (T2) übertragen werden, wobei die Nutzsignale, d. h. die Working-Signale (WS1, WS2) und die Protection-Signale (PS1, PS2), und/oder die Kontrollsignale (CW1, CP1; CW2, CP2) empfangsseitig ausgewertet werden und bei einem gestörten oder fehlenden Nutzsignal auf das ungestörte umgeschaltet wird,
**dadurch gekennzeichnet,**
**daß**, wenn eine Belegungsinformation (BW1, BP1) empfangen wurde und wenn in einem ersten Terminal (T1) ein Nutz-Signal (WS1, PS1) einschließlich des zugehörigen Kontrollsignals (CW1, CP1) nicht empfangen wird, ein geändertes Kontrollsignal (CW2, CP2) oder ein Laser-Fernabschaltsignal (RLSS) zum korrespondierenden Terminal (T2) übertragen wird, wodurch bei diesem Terminal (T2) die Aussendung des Nutz-Signals (WS1, PS1) aber nicht der zugeordneten Kontrollsignale (CW1, CP1) verhindert wird und
**daß** beim korrespondierenden Terminal (T2) eine Abschaltung des Nutz-Signals (WS1, WS2, PS1, PS2) erfolgt aber das zugeordnete Kontrollsignal (CW1, CW2, CP1, CP2) weiterhin mit einem geringen zulässigen Pegel übertragen wird.

2. Verfahren zur Ersatzschaltung nach Anspruch 1,
**dadurch gekennzeichnet,**
**daß** nur dann auf das Protection-Signal (PS1) umgeschaltet wird, wenn ein Kriterium (AP, BP1) für dessen Vorhandensein ermittelt wurde.

3. Verfahren nach Anspruch 1 oder 2,
**dadurch gekennzeichnet,**
**daß** das Vorhandensein des empfangenen Working-Signals (WS1) und des Protection-Signals (PS1) durch Überwachung des jeweiligen Signalpegels und/oder der Kontrollsignale (CW1, CP1) überprüft wird und daß diese Kriterien zur Entscheidung, ob eine Protection-Umschaltung und/oder eine Abschaltung des Nutzsignals erfolgen soll, ausgewertet werden.

4. Verfahren nach Anspruch 1, 2 oder 3,
**dadurch gekennzeichnet,**
**daß** bei Ausfall des empfangenen Working-Signals (WS1) oder bei Ausfall des empfangenen Protection-Signals (PS1) im betroffenen ersten Terminal (T1) das entsprechende auszusendende Working-Signal (WS2) oder Protection-Signal (PS2) abgeschaltet wird.

5. Verfahren nach Anspruch 1 und 3,
**dadurch gekennzeichnet,**
**daß** bei fehlendem Working-Signal (WS1) und fehlendem Protection-Signal (PS1) einschließlich der jeweiligen Kontrollsignale (CW1, CP1) im betroffenen ersten Terminal (T1) das auszusendende Working-Signal (WS2) und das auszusendende Protection-Signal (PS2) abgeschaltet werden und geänderte Kontrollsignale (CW2, CP2) oder Laser-Fernabschaltsignale (RLSS) übertragen werden.

6. Verfahren zur Laser-Sicherheitsabschaltung und/oder Ersatzschaltung bei einer optischen Übertragungseinrichtung, bei dem zwischen einem ersten Terminal (T1) und einem weiteren Terminal (T3) in jeder Übertragungsrichtung über jeweils eine Lichtleitfaser (L3) und eine weitere Lichtleitfaser (L4) jeweils ein Working-Signal (WS3; WS4) und ein zugeordnetes Kontrollsignal (CW3; CW4) übertragen werden,
**dadurch gekennzeichnet,**
**daß**, wenn von einem der Terminals (T3) das über eine der Lichtleitfasern (L3) übertragene Working-Signals (WS3) einschließlich des zugehörigen Kontrollsignals (CW3) nicht empfangenen wird, das zum korrespondierenden Terminal (T1) über die andere Lichtleitfaser (L4) zu übertragende eigene Working-Signal (WS4) abgeschaltet wird aber in einem weiterhin aktiven Überwachungskanal über die weitere Lichtleitfaser (L4) ein geändertes Kontrollsignal (CW4) oder ein Laser-Fernabschaltsignal (RLSS) zum korrespondierenden Terminal (T1) gesendet wird, wodurch in diesem Terminal (T1) die Aussendung des nicht empfangenen Working-Signals (WS3), aber nicht des diesem Working-Signal (WS3) zugeordneten Kontrollsignals (CW3) verhindert wird und
**daß** bei Abschaltung des Working-Signals (WS3, WS4) das jeweils zugeordnete Kontrollsignal (CW3, CW4) weiterhin mit einem geringen zulässigen Pegel übertragen wird.

7. Verfahren nach Anspruch 6,
**dadurch gekennzeichnet,**
**daß** die Laser-Sicherheitsabschaltung eines auszusendenden Working-Signals (WS3, WS4) erfolgt, wenn außer dem geänderten Kontrollsignal (CW3, CW4) oder dem speziellen Laser-Fernabschaltsignal (RLSS) kein Working-Signal (WS3; WS4) empfangen wird.

8. Verfahren nach Anspruch 6 oder 7,
**dadurch gekennzeichnet,**
**daß** bei einem nicht empfangenen Working-Signal (WS3) eine Faser-Ersatzschaltung über eine ungestörte Datenverbindung (DV1, DV3) erfolgt.

9. Verfahren nach einem der vorhergehenden Ansprüche,
**dadurch gekennzeichnet,**
**daß** die Kontroll-Signale (CW1, CP1, CW2, CP2; CW3, CW4) über Überwachungskanäle mit Wellenlängen außerhalb des Nutzbandes der Working- bzw. der Protection-Kanäle übertragen werden.

10. Verfahren nach einem der vorhergehenden Ansprüche,
**dadurch gekennzeichnet,**
**daß** bei der Einschaltung oder Wiedereinschaltung einer Verbindung (DV1, DV3) eine Abschaltlogik für die Working Signale (WS1-WS4) und/oder Protection-Signale (PS1, PS2) zunächst aktiviert bleibt, aber durch den Empfang eines entsprechenden Kontrollsignals (CW1, CP1; CW3) die Signalisierung eines Kontrollsignals (CW2, CP2, RLSS; CW4) zur Laser-Fernabschaltung des korrespondierenden Terminals (T2; T1) beendet wird.

11. Verfahren nach einem der vorhergehenden Ansprüche,
**dadurch gekennzeichnet,**
**daß** als Kontrollsignale (CW1, CW2, CP1, CP2) eine Belegungsinformation (BW1, BP1) übertragen wird, die das Aussenden mindestens eines Teilsignals eines Wellenlängen-Multiplexsignals signalisiert und daß diese Information beim korrespondierenden Terminal (T1, T2) zur Entscheidung, ob eine Protection-Umschaltung und/oder eine Abschaltung des Nutzsignals erfolgen soll, ausgewertet wird.

## Claims

1. Method for laser safety switch-off and/or fibre standby switching in optical transmission devices, in which, from a second terminal (T2) to a first terminal (T1), a working signal (WS1) and an associated control signal (CW1) with an allocation information item (BW1) for the working signal (WS1) are jointly transmitted via a working optical fibre (L1) and an identical protection signal (PS1) and an associated control signal (CP1) with an allocation information item (BP1) for the protection signal (PS1) are jointly transmitted via a protection optical fibre (P1), and corresponding working protection and control signals (WS2, CS2; PS2, CP2) are transmitted via two further optical fibres (L2, P2) from the first terminal (T1) to the second terminal (T2), the useful signals, i.e. the working signals (WS1, WS2) and the protection signals (PS1, PS2), and/or the control signals (CW1, CP1; CW2, CP2) being evaluated at the receiving end and, in the event of a disturbed or absent useful signal, a switchover being made to the undisturbed one,
**characterized**
**in that**, if an allocation information item (BW1, BP1) has been received and if a useful signal (WS1, PS1) including the associated control signal (CW1, CP1) is not received in a first terminal (T1), a changed control signal (CW2, CP2) or a remote laser switch-off signal (RLSS) is transmitted to the corresponding terminal (T2), thereby preventing, at this terminal (T2), the transmission of the useful signal (WS1, PS1), but not of the assigned control signals (CW1, CP1), and
**in that**, at the corresponding terminal (T2), the useful signal (WS1, WS2, PS1, PS2) is switched off, but the assigned control signal (CW1, CW2, CP1, CP2) continues to be transmitted with a low permissible level.

2. Method for standby switching according to Claim 1,
**characterized**
**in that** a switchover is made to the protection signal (PS1) only when a criterion (AP, BP1) for the presence of said protection signal has been determined.

3. Method according to Claim 1 or 2,
**characterized**
**in that** the presence of the received working signal (WS1) and of the protection signal (PS1) is checked by monitoring the respective signal level and/or the control signals (CW1, CP1), and in that these criteria are evaluated for the decision as to whether a protection switchover and/or a switch-off of the useful signal should be effected.

4. Method according to Claim 1, 2 or 3,
**characterized**
**in that**, in the event of the failure of the received working signal (WS1) or in the event of the failure of the received protection signal (PS1), in the affected first terminal (T1), the corresponding working signal (WS2) or protection signal (PS2) to be transmitted is switched off.

5. Method according to Claims 1 and 3,
**characterized**
**in that**, in the event of an absent working signal (WS1) and an absent protection signal (PS1) including the respective control signals (CW1, CP1), in the affected first terminal (T1), the working signal (WS2) to be transmitted and the protection signal (PS2) to be transmitted are switched off and changed control signals (CW2, CP2) or remote laser switch-off signals (RLSS) are transmitted.

6. Method for laser safety switch-off and/or standby switching in an optical transmission device, in which a working signal (WS3; WS4) and an assigned control signal (CW3; CW4) are respectively transmitted between a first terminal (T1) and a further terminal (T3) in each transmission direction respectively via an optical fibre (L3) and a further optical fibre (L4),
**characterized**
**in that**, if the working signal (WS3) transmitted via one of the optical fibres (L3), including the associated control signal (CW3), is not received by one of the terminals (T3), the dedicated working signal (WS4) that is to be transmitted to the corresponding terminal (T1) via the other optical fibre (L4) is switched off but in a monitoring channel, which is still active, via the further optical fibre (L4), a changed control signal (CW4) or a remote laser switch-off signal (RLSS) is transmitted to the corresponding terminal (T1), thereby preventing in this terminal (T1) the transmission of the non-received working signal (WS3), but not of the control signal (CW3) assigned to said working signal (WS3), and in that, in the event of the working signal (WS3, WS4) being switched off, the respectively assigned control signal (CW3, CW4) continues to be transmitted with a low permissible level.

7. Method according to Claim 6,
**characterized**
**in that** the laser safety switch-off of a working signal (WS3, WS4) to be transmitted is effected if, in addition to the changed control signal (CW3, CW4) or the special remote laser switch-off signal (RLSS), no working signal (WS3; WS4) is received.

8. Method according to Claim 6 or 7,
**characterized**
**in that**, in the event of a non-received working signal (WS3), fibre standby switching via an undisturbed data connection (DV1, DV3) is effected.

9. Method according to one of the preceding claims,
**characterized**
**in that** the control signals (CW1, CP1, CW2, CP2; CW3, CW4) are transmitted via monitoring channels with wavelengths outside the useful band of the working and of the protection channels, respectively.

10. Method according to one of the preceding claims,
**characterized**
**in that**, in the event of a connection (DV1, DV3) being switched on or switched on again, a switch-off logic unit for the working signals (WS1-WS4) and/or protection signals (PS1, PS2) initially remains activated, but the signalling of a control signal (CW2, CP2, RLSS; CW4) for remote laser switch-off of the corresponding terminal (T2; T1) is ended by the reception of a corresponding control signal (CW1, CP1; CW3).

11. Method according to one of the preceding claims,
**characterized**
**in that** an allocation information item (BW1, BP1) is transmitted as control signals (CW1, CW2, CP1, CP2), which information item signals the transmission of at least one signal element of a wavelength division multiplex signal, and in that said information item is evaluated at the corresponding terminal (T1, T2) for the decision as to whether a protection switchover and/or a switch-off of the useful signal should be effected.

## Revendications

1. Procédé pour une déconnexion de sécurité du laser et/ou pour une commutation de secours par fibres, dans des dispositifs de transmission optique, dans lequel un signal de travail (WS1) et un signal de contrôle correspondant (CW1) avec une information d'occupation (BW1) pour le signal de travail (WS1) sont transmis en commun par l'intermédiaire d'une fibre optique de travail (L1) et un signal de protection identique (PS1) et un signal de contrôle correspondant (CP1) avec une information d'occupation (BP1) pour le signal de protection (PS1) sont transmis en commun par l'intermédiaire d'une fibre optique de protection (P1) d'un deuxième terminal (T2) à un premier terminal (T1) et des signaux de travail, de protection et de contrôle correspondants (WS2, CS2 ; PS2, CP2) sont transmis par l'intermédiaire de deux autres fibres optiques (L2, P2) du premier terminal (T1) au second terminal (T2), les signaux utiles, c'est-à-dire les signaux de travail (WS1, WS2) et les signaux de protection (PS1, PS2), et/ou les signaux de contrôle (CW1, CP1 ; CW2, CP2) étant évalués du côté réception et si un signal utile est perturbé ou absent, on commute sur le signal non perturbé,
**caractérisé en ce que**,
si une information d'occupation (BW1, BP1) est réceptionnée et si dans un premier terminal (T1), un signal utile (WS1, PS1) y compris le signal de contrôle correspondant (CW1, CP1) n'est pas réceptionné, un signal de contrôle modifié (CW2, CP2) ou un signal de déconnexion à distance du laser (RLSS) est transmis vers le terminal correspondant (T2), dans ce terminal (T2), l'émission du signal utile (WS1, PS1) étant entravée de ce fait, mais pas celle des signaux de contrôle (CW1, CP1) associés et dans le terminal (T2) correspondant, on assiste à une déconnexion du signal utile (WS1, WS2, PS1, PS2), mais le signal de contrôle associé (CW1, CW2, CP1, CP2) continue d'être transmis à un bas niveau admissible.

2. Procédé pour une commutation de secours selon la revendication i , **caractérisé en ce qu'**une commutation sur le signal de protection (PS1) a lieu uniquement si un critère (AP, BP1) pour la présence de ce dernier a été détecté.

3. Procédé selon l'une quelconque des revendications 1 ou 2, **caractérisé en ce que** la présence du signal de travail (WS1) réceptionné et du signal de protection (PS1) est contrôlée par surveillance du niveau respectif du signal et/ou des signaux de contrôle (CW1, CP1) et **en ce que** ces critères sont évalués pour décider si une commutation de protection et/ou une déconnexion du signal utile doit avoir lieu.

4. Procédé selon l'une quelconque des revendications 1, 2 ou 3, **caractérisé en ce qu'**en cas de perte du signal de travail réceptionné (WS1) ou en cas de perte du signal de protection réceptionné (PS1) dans le premier terminal (T1) concerné, le signal de travail (WS2) correspondant devant être émis ou le signal de protection (PS2) sont déconnectés.

5. Procédé selon les revendications 1 et 3, **caractérisé en ce qu'**en cas d'absence du signal de travail (WS1) et en cas d'absence du signal de protection (PS1), y compris les signaux de contrôle respectifs (CW1, CP1) dans le premier terminal (T1) concerné, le signal de travail (WS2) et le signal de protection (PS2) devant être émis sont déconnectés et des signaux de contrôle modifiés (CW2, CP2) ou des signaux de déconnexion à distance du laser (RLSS) sont transmis.

6. Procédé pour la déconnexion de sécurité d'un laser et/ou pour la commutation de secours dans un dispositif de transmission optique, dans lequel dans chaque direction de transmission, respectivement une fibre optique (L3) et une autre fibre optique (L4), respectivement un signal de travail (WS3 ; WS4) et un signal de contrôle associé (CW3 ; CW4) sont transmis entre un premier terminal (T1) et un autre terminal (T3), **caractérisé en ce que** si l'un des terminaux (T3) ne réceptionne pas le signal de travail (WS3), y compris le signal de contrôle correspondant (CW3), transmis par l'intermédiaire de l'une des fibres optiques (L3), le signal de travail (WS4) propre devant être transmis vers le terminal correspondant (T1), par l'intermédiaire de l'autre fibre optique (L4) est déconnecté, mais qu'un signal de contrôle modifié (CW4) ou un signal de déconnexion à distance du laser (RLSS) est envoyé au terminal correspondant (T1), dans un canal de surveillance restant actif, par l'intermédiaire de l'autre fibre optique (L4), suite à quoi l'émission du signal de travail (WS3) non réceptionné mais pas celle du signal de contrôle (CW3) associé à ce signal de travail (WS3) est entravée au sein de ce terminal (T1) et **en ce que** lors de la déconnexion du signal de travail (WS3, WS4), le signal de contrôle (CW3, CW4) respectivement associé continue d'être transmis à un bas niveau admissible.

7. Procédé selon la revendication 6, **caractérisé en ce qu'**on assiste à la déconnexion de sécurité du laser d'un signal de travail (WS3, WS4) devant être émis, si hormis le signal de contrôle modifié (CW3, CW4) ou le signal spécial de déconnexion à distance par laser (RLSS), aucun signal de travail (WS3, WS4) n'est réceptionné.

8. Procédé selon l'une quelconque des revendications 6 ou 7, **caractérisé en ce que** si un signal de travail (WS3) n'est pas réceptionné, une commutation de secours par fibre a lieu par l'intermédiaire d'une liaison de données non perturbée (DV1, DV3).

9. Procédé selon l'une quelconque des revendications précédentes, **caractérisé en ce que** les signaux de contrôle (CW1, CP1, CW2, CP2 ; CW3, CW4) sont transmis par l'intermédiaire de canaux de surveillance, à des longueurs d'ondes situées hors de la bande utile des canaux de travail resp. de protection.

10. Procédé selon l'une quelconque des revendications précédentes, **caractérisé en ce que** lors de la mise sous tension ou de la remise sous tension d'une liaison (DV1, DV3), une logique de déconnexion pour les signaux de travail (WS1 à WS4) et/ou les signaux de protection (PS1, PS2) reste d'abord activée, mais par la réception d'un signal de contrôle (CW1, CP1 ; CW3) correspondant, la signalisation d'un signal de contrôle (CW2, CP2, RLSS ; CW4) pour la déconnexion à distance du laser du terminal correspondant (T2 ; T1) est achevée.

11. Procédé selon l'une quelconque des revendications précédentes, **caractérisé en ce qu'**une information d'occupation (BW1, BP1), qui signale l'émission d'au moins un signal partiel d'un signal de multiplexage en longueurs d'ondes est transmise en tant que signaux de contrôle (CW1, CW2, CP1, CP2) et **en ce que** cette information est évaluée auprès du terminal correspondant (T1, T2), pour décider si une commutation de protection et/ou une déconnexion du signal utile doit avoir lieu.
